# EUROPEAN PATENT SPECIFICATION

(11) **EP 0 485 457 B1**
(45) Date of publication and mention of the grant of the patent: **01.02.1995**
(21) Application number: 90911849.9
(22) Date of filing: 03.08.1990
(51) Int. Cl.: B62D 29/04

(54) **PLASTIC BODY ARRANGEMENT FOR SMALL, LIGHT VEHICLES**
KUNSTSTOFFBEKLEIDUNGSANORDNUNG FÜR KLEINE LEICHTE FAHRZEUGE
AGENCEMENT DE CARROSSERIE EN PLASTIQUE POUR PETITS VEHICULES LEGERS

(30) Priority: 04.08.1989 NO 893155
(43) Date of publication of application: 20.05.1992
(73) Proprietor: A/S RINGDAL PATENTER, 0975 Oslo 5 (NO)
(72) Inventor: RINGDAL, Jan, Otto, N-0389 Oslo 3 (NO); RINGDAL, Lars, N-0377 Oslo 3 (NO)
(74) Representative: Cline, Roger Ledlie
(86) International application number: NO9000127
(87) International publication number: WO9101910

(56) References cited:
- DE-A- 301 695
- DE-A- 2 056 713
- DE-C- 729 881
- FR-A- 2 076 402
- GB-A- 1 315 373
- GB-A- 2 088 792
- SE-B- 106 481
- US-A- 4 682 809

## Description

The present invention relates to an arrangement by and a method for the production of bodies/cabins for lightweight vehicles, by which the bodies/cabins are moulded/cast/blow moulded, mainly with floor, sidewall and roof in one piece, by means of floating/spot-free devices for securing/fixing the cabin to the vehicle's roll-over safety bars and floor frame/chassis.

For the building of car bodies/cabins, it has been normal to use a metal frame with plates welded on as bodywork. This is possible when the plates and the framework are both metallic. Building bodies/cabins with glass-fibre reinforced Polyester has been tried, but it proves to be extremely work-intensive. It necessitates a substantial amount of handwork, being built up in layers and thus making the bodies expensive. The fixing between a metal framework and the plastic bodyparts by screws or rivets creates local stresses.

Metal bodies have therefore more or less controlled the market, but these are heavy and have disadvantages such as corrosion and the like. Comprehensive galvanization and paint treatment have been necessary, but the problems still exist. Another drawback is that the bodies are getting very heavy, which has impeded the development of small, lightweight vehicles.

SE-C-106481 describes a body/cabin assembly for small, lightweight vehicles with a plastic body/cabin formed with inward recesses defining door/window apertures, an interior framework mounted on the floor of the assembly and profiles connected to the inward edge of the apertures and fixed to the framework. The profiles are, however, fixedly connected to the inward edge of the apertures and the apertures are only lightly recessed from the side wall of the body/cabin. This leads to problems with rigidity in the body/cabin and the fixed connection between the body/cabin and the framework by means of the profiles may not be desirable when they are materials of differing thermal expansion.

The present invention improves on this arrangement by the features of the characterizing clause of claim 1, in one aspect and provides an improved method of producing a body/cabin assembly as set out in claim 2, in another aspect.

Optional features of the invention are set out in the remaining claims, and these include the possibility of securing the weatherstrip/gasket around the doors and windows. It is assumed that these opening shall not have sharp-angled corners, but preferably rounded ones with a radius of 20 mm or more. The profiles are, according to the invention, also intended to cover the plastic edges resulting from the cutting out of openings for doors and windows.

As mentioned above, the invention is intended to be used for lightweight bodies/cabins and it assumes therefore that the side door is combined as/with window. Preferably, the whole door should be made of an impact-resistant, transparent plastic. The internal roll-over safety bars curve toward the ceiling has a greater radius than that of the adjacent part of the plastic body/cabin. This means that it allows for varying expansions and shrinkage of the plastic and metal parts when temperatures change.

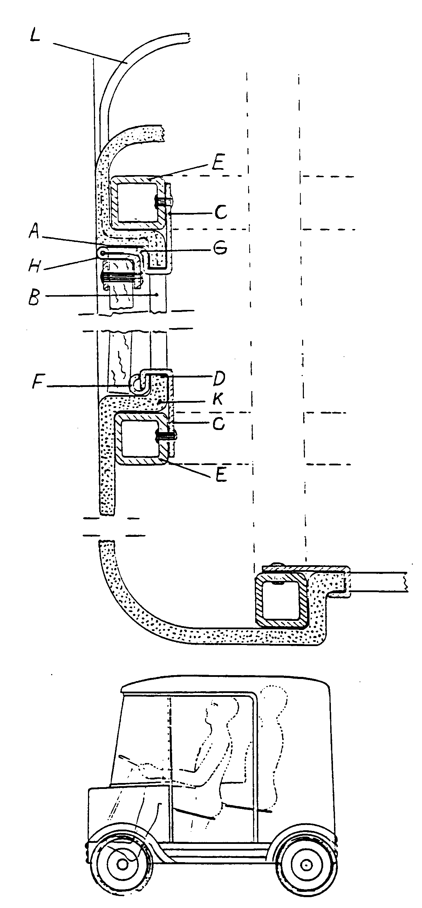

The invention can be produced in various ways, and the enclosed drawing of details shows one means of production, where A shows the body/cabin part with a recesssed area (K) for the door opening. B shows the cut out door opening, with the cut edge forming an end projection D a slight distance from an angular portion innermost in the recessed area. A profile C envelops the remaining end of the angular portion and the end projection D, and fastens the body/cabin A floatingly to the roll-over bars framework E, which can be round or square. The profile C can be fixed to the roll-over bars framework E by e.g. means of screws or rivets. The profile C has an extension on the side of the door and window intended for hinges G, for fastening the hinges. The profile C is also used to fasten a weatherstrip/gasket F around the door and windows. The windscreen L can likewise overlap the roll-over bar framework E at the back and is secured by the profile C.

## Claims

1. A body/cabin assembly for small, lightweight vehicles with a plastic body/cabin (A) formed with inward recesses defining door/window apertures (B), an interior framework mounted on the floor of the assembly, profiles (C) connected to the inward edge of the apertures and fixed to the framework (E).
characterized in that the inward recesses comprise a first part directed inwardly from the side wall of the cabin and a second part directed into the aperture (B), the profiles (C) being connected in a slidable manner around the free ends (D) of the second parts to allow relative sliding movement between the body/cabin and the framework.

2. A method for producing a stiffened body/cabin assembly for small, lightweight vehicles, by which an outer shell of a lightweight body/cabin (A) is produced by moulding or casting with inward recesses defining door/window apertures (B), the assembly further comprising an interior framework (E) mounted on the floor of the assembly, the body/cabin being connected at the inward edges of the apertures by profiles fixed to the framework,
characterized in that the inward recesses are formed with a first part directed inwardly from the side wall of the cabin and a second part directed into the aperture (B), the profiles (C) being connected in a slidable manner around the free ends (D) of the second parts to allow relative sliding movement between the body/cabin and the framework.

3. A method as claimed in claim 2, characterized in that the door and window apertures (B) in the body/cabin shell (A) are cut out from a recessed area (K) with an inward curve of approximately 90° from the outside and inwards, terminating with an angular portion, the cutting out/trimming of the apertures (B) being carried out leaving an end projection (D) from the angular portion.

4. A method as claimed in claims 2 and 3, characterized in that one bar/framework (E) is positioned on either side of the door apertures (B), adjacent to and covered by plastic from the body/cabin on at least two sides.

5. A method as claimed in claims 2 to 4, characterized in that the profile (C) is positioned for forming a cover for the body's/cabin's plastic end projections (D) against the door and window apertures (B).

6. A method as claimed in claims 2 to 5, characterized in that the edge of a weatherstrip/gasket (F) is fixed by the profile (C).

7. A method as claimed in claims 2 to 6, characterized in that the profile (C) is strengthened/lengthened on one side (G) forming a hinge/fixing point for hinges (H).

8. A method as claimed in claims 2 to 7, characterized in that the front screen (L) ends with the same inward curving profile and finish described for the body/cabin in item (2) and is fastened to the bar by profile (C).

9. A method as claimed in claim 2, characterized in that the body/cabin (A) is shaped with the floor, sidewalls and roof in one piece, by means of rotational moulding.

10. A method as claimed in claim 2, characterized in that the body/cabin (A) is formed with the floor, sides and roof in one piece, by means of blow moulding.

## Patentansprüche

1. Aufbau-/Fahrgastraum-Einheit für kleine, leichte Fahrzeuge mit einem Aufbau/Fahrgastraum (A) aus Kunststoff, der mit nach innen gerichten, Tür-/Fensteröffnungen (B) bezeichnenden Aussparungen gebildet ist, einer auf dem Boden der Einheit gehalterten Innen-Rahmenkonstruktion, mit der Innenkante der Öffnungen verbundenen und an der Rahmenkonstruktion (E) befestigten Profilstücken (C), dadurch gekennzeichnet, daß die nach innen gerichteten Aussparungen ein erstes, von der Seitenwand des Fahrgastraums aus nach innen gerichtetes Teilstück und ein zweites, in die Öffnung (B) gerichtetes Teilstück umfassen, wobei die Profilstücke (C) verschiebbar um die freien Enden (D) der zweiten Teilstücke verbunden sind, um eine relative Schiebebewegung zwischen dem Aufbau/Fahrgastraum und der Rahmenkonstruktion zu ermöglichen.

2. Verfahren zur Herstellung einer versteiften Aufbau-/Fahrgastraum-Einheit für kleine, leichte Fahrzeuge, durch welches eine äußere Hülle eines leichten Aufbaus/Fahrgastraums (A) durch Formen bzw. Gießen hergestellt wird, wobei nach innen gerichtete Aussparungen Tür-/Fensteröffnungen (B) bezeichnen, wobei die Einheit ferner eine auf dem Boden der Einheit gehalterte Innen-Rahmenkonstruktion (E) umfaßt, wobei der Aufbau/Fahrgastraum durch an der Rahmenkonstruktion befestigte Profilstücke mit den Innenkanten der Öffnungen verbunden wird, dadurch gekennzeichnet, daß die nach innen gerichteten Aussparungen mit einem ersten, von der Seitenwand des Fahrgastraums aus nach innen gerichteten Teilstück und einem zweiten, in die Öffnung (B) gerichteten Teilstück gebildet sind, wobei die Profilstücke (C) verschiebbar um die freien Enden (D) der zweiten Teilstücke verbunden sind, um eine relative Schiebebewegung zwischen dem Aufbau/Fahrgastraum und der Rahmenkonstruktion zu ermöglichen.

3. Verfahren nach Anspruch 2, dadurch gekennzeichnet, daß die Tür- und Fensteröffnungen (B) in der Aufbau-/Fahrgastraumhülle (A) aus einem ausgesparten Bereich (K) mit einer Innenkurve von ungefähr 90° von der Außenseite und nach innen hin ausgeschnitten werden und mit einem Winkelabschnitt enden, wobei das Ausschneiden/Zurichten der Öffnungen (B) so ausgeführt wird, daß ein Endvorsprung (D) vom Winkelabschnitt aus verbleibt.

4. Verfahren nach den Ansprüchen 2 und 3, dadurch gekennzeichnet, daß auf jeder Seite der Türöffnungen (B) eine Stange/Rahmenkonstruktion (E) angeordnet ist, und zwar neben dem und bedeckt vom Kunststoff vom Aufbau/Fahrgastraum auf mindestens zwei Seiten.

5. Verfahren nach den Ansprüchen 2 bis 4, dadurch gekennzeichnet, daß das Profilstück (C) so angeordnet ist, daß es eine Abdeckung für die Kunststoff-Endvorsprünge (D) des Aufbaus/Fahrgastraums gegen die Tür- und Fensteröffnungen (B) bildet.

6. Verfahren nach den Ansprüchen 2 bis 5, dadurch gekennzeichnet, daß die Kante eines Gummistreifens/einer Dichtung (F) durch das Profilstück (C) befestigt ist.

7. Verfahren nach den Ansprüchen 2 bis 6, dadurch gekennzeichnet, daß das Profilstück (C) auf einer Seite (G) unter Bildung eines Scharniers/einer Befestigungsstelle für Scharniere (H) verstärkt/verlängert ist.

8. Verfahren nach den Ansprüchen 2 bis 7, dadurch gekennzeichnet, daß die Vorderscheibe (L) mit demselben nach innen gebogenen Profilstück und derselben Endausführung, wie sie in Punkt (2) für den Aufbau/Fahrgastraum beschrieben wird, endet und durch Profilstück (C) an der Stange befestigt ist.

9. Verfahren nach Anspruch 2, dadurch gekennzeichnet, daß der Aufbau/Fahrgastraum (A) durch Rotationsformung mit dem Boden, den Seitenwänden und dem Dach in einem Stück gebildet ist.

10. Verfahren nach Anspruch 2, dadurch gekennzeichnet, daß der Aufbau/Fahrgastraum (A) durch Blasformung mit dem Boden, den Seitenwänden und dem Dach in einem Stück ausgebildet ist.

## Revendications

1. Ensemble carrosserie/cabine pour de petits véhicules de poids légers ayant une carrosserie/cabine (A) en plastique formée avec des évidements internes définissant des ouvertures de portière/fenêtre (B), une charpente intérieure montée sur le sol de l'ensemble, des profils (C) reliés au bord interne des ouvertures et fixés sur la charpente (E)
caractérisé en ce que les évidements internes comprennent une première partie dirigée vers l'intérieur depuis la paroi latérale de la cabine et une seconde partie dirigée dans l'ouverture (B), les profils (C) étant reliés de manière coulissable autour des extrémités libres (D) des secondes parties pour permettre un mouvement de coulisse relatif entre la carrosserie/cabine et la charpente.

2. Méthode pour produire un ensemble rigide de carrosserie/cabine pour de petits véhicules légers, grâce à laquelle on produit une coque extérieure de carrosserie/cabine (A) légère par moulage ou coulage, des évidements internes définissant des ouvertures de portière/fenêtre (B), l'ensemble comprenant en outre une charpente intérieure (E) montée sur le sol de l'ensemble, la carrosserie/cabine étant reliée au niveau des bords intérieurs des ouvertures par des profils fixés sur la charpente,
caractérisée en ce que les évidements internes sont formés avec une première partie dirigée vers l'intérieur depuis la paroi latérale de la cabine et une seconde partie dirigée dans l'ouverture (B), les profils (C) étant reliés de manière coulissable autour des extrémités libres (D) des secondes parties pour permettre un mouvement de coulisse relatif entre la carrosserie/cabine et la charpente.

3. Méthode selon la revendication 2, caractérisée en ce que les ouvertures de portière/fenêtre (B) dans la coque de carrosserie/cabine (A) sont découpées dans une zone évidée (K) ayant une courbe interne d'environ 90° depuis l'extérieur et vers l'intérieur, se terminant en une portion angulaire, la découpe/le rognage des ouvertures (B) étant effectué en laissant une saillie d'extrémité (D) à partir de la portion angulaire.

4. Méthode selon les revendications 2 et 3, caractérisée en ce qu'une barre/charpente (E) est positionnée sur l'un ou l'autre côté des ouvertures de portière (B), adjacente à et recouverte par du plastique de la carrosserie/cabine sur au moins deux côtés.

5. Méthode selon les revendications 2 à 4, caractérisée en ce que le profil (C) est positionné pour former une couverture pour les saillies (D) d'extrémité en plastique de la carrosserie/cabine contre les ouvertures (B) de portière et fenêtre.

6. Méthode selon les revendications 2 à 5, caractérisée en ce que le bord d'un bourrelet/joint d'étanchéité (F) est fixé par le profil (C).

7. Méthode selon les revendications 2 à 6, caractérisée en ce que le profil (C) est renforcé/allongé sur un côté (G) formant une articulation/un point de fixation pour des charnières (H).

8. Méthode selon les revendications 2 à 7, caractérisée en ce que le pare-brise avant (L) se termine par le même profil recourbé vers l'intérieur et les mêmes finitions décrits pour la carrosserie/cabine dans le point (2) et est attaché à la barre par le profil (C).

9. Méthode selon la revendication 2, caractérisée en ce que la carrosserie/cabine (A) est façonnée avec le sol, les parois latérales et le toit en une même pièce, au moyen de moulage rotationnel.

10. Méthode selon la revendication 2, caractérisée en ce que la carrosserie/cabine (A) est formée avec le sol, les côtés et le toit en une seule pièce, au moyen d'extrusion-soufflage.
